# EUROPÄISCHE PATENTSCHRIFT

(11) **EP 0 775 079 B1**
(45) Veröffentlichungstag und Bekanntmachung des Hinweises auf die Patenterteilung: **03.06.1998**
(21) Anmeldenummer: 94928840.1
(22) Anmeldetag: 28.09.1994
(51) Int. Cl.: B66B 23/00, B65G 45/08

(54) **ANTRIEBSSYSTEM FÜR ROLLTREPPEN UND ROLLSTEIGE**
DRIVE SYSTEM FOR ESCALATORS OR MOVING PAVEMENTS
DISPOSITIF D'ENTRAINEMENT POUR ESCALIER MECANIQUES ET TROTTOIRS ROULANTS

(30) Priorität: 06.10.1993 DE 4334064
(43) Veröffentlichungstag der Anmeldung: 28.05.1997
(73) Patentinhaber: O&K ROLLTREPPEN GmbH, 45525 Hattingen (DE); KETTEN WULF GmbH, Gelenkketten- und Kettenräderfabrik, 59883 Eslohe-Kückelheim (DE)
(72) Erfinder: HÖFLING, Peter, D-44141 Dortmund (DE); WILKE, Hermann, D-59889 Eslohe (DE); HAUSER, Henrik, D-44137 Dortmund (DE)
(74) Vertreter: Zipse + Habersack
(86) Internationale Anmeldenummer: EP9403244
(87) Internationale Veröffentlichungsnummer: WO9509802

(56) Entgegenhaltungen:
- EP-A- 0 094 110
- EP-A- 0 490 591
- EP-A- 0 601 469
- DE-A- 3 808 912
- FR-A- 2 545 798
- US-A- 3 815 959
- US-A- 4 232 783
- US-A- 5 219 060

## Beschreibung

Die Erfindung betrifft ein Antriebssystem für die Trittstufen und Wagenpaletten von Rolltreppen und Rollsteigen, bestehend aus jeweils einer seitlich der Trittstufen bzw. Wagenpaletten angeordneten Transportkette, die eine Vielzahl von mit Buchsen zusammenwirkenden Kettenbolzen unterschiedlicher axialer Länge beinhaltet, wobei die axial längeren, jeweils mit einer Laufrolle bestückten Kettenbolzen im Bereich der Trittstufen bzw. Wagenpaletten vorgesehen und mit diesen ggf. über weitere Bauelemente verbunden sind, ferner eine Vielzahl von mit den axial kürzeren Kettenbolzen und Buchsen sowie ggf. ebenfalls mittels Laufrollen zusammenwirkenden Laschen beinhaltet, die als Innenlaschen drehfest mit den Buchsen und als Außenlaschen drehfest mit den Kettenbolzen verbunden sind, wobei im Bereich beider Stirnseiten der Buchsen Dichtelemente vorgesehen sind.

Die EP-A 94 110 betrifft eine Transportkette, insbesondere für Fahrtreppen oder Personenförderbänder, die Kettenbolzen beinhaltet, die mindestens eine Schmierfläche aufweisen, welche Zwei Außenlaschen und zwischen diesen angeordnete Buchsen tragen, wobei auf die Buchsen jeweils ein Laufrad und beiderseits des Laufrades je eine Innenlasche angeordnet sind. Am Kettenbolzen sind beiderseits der Schmierflächen und innerhalb der Buchsen je eine mit einem Dichtungsring versehene Umfangsrille und zwischen den Buchsenenden und der gegenüberliegenden Außenlasche je eine Dichtungsscheibe angeordnet. Der Dichtungsring ist als Gummi-O-Ring ausgebildet, während die Dichtungsscheibe aus einem verschleißfreien Werkstoff besteht. Die Schmierfläche der kettenbolzen weist mindestens ein senkrecht zur Schmierfläche und in der Achse des Kettenbolzens angeordnetes Loch auf. Durch diesen St.d.T. soll eine Transportkette gebildet werden, die sich für den Einsatz in feuchter Atmosphäre und bei Schmutzanfall eignet und keine Nachschmierung für die Gelenke erfordert. Da hier jedoch eine Buchsenkette herkömmlicher Bauart zum Einsatz gelangt und Nachschmiermöglichkeiten ebenfalls vorgesehen sind und auch sein müssen, kann somit lediglich von einer wartungsärmeren Transportkette die Rede sein, zumal lediglich Maßnahmen getroffen sind, den unvermeidlichen Schmiermittelaustritt nach außen zu begrenzen sowie den Schmutzeintritt von außen nach innen zu reduzieren. Im Hinblick auf die nach wie vor ständige Reibung zwischen den Dichtungen und den korrespondierenden Bauelementen kann nicht ausgeschlossen werden, daß, über die Standzeit der Transportkette gesehen, der Verschleiß zu einem weiteren unerwünschten Schmiermittelaustritt führt, der letztendlich wieder zu ebenfalls unerwünschten Verschmutzungen nicht nur der Kette sondern auch an anderen Bauteilen der Rolltreppen bzw. Rollsteige führt. Ferner nachteilig ist anzuführen, daß durch die Verwendung der üblichen Stahlbauteile für die Kettenbolzen und die sie umgebenden Buchsen nicht unerhebliche Laufgeräusche entstehen, die sich insbesondere bei Mangelschmierung der Kette bemerkbar machen.

Ziel des Erfindungsgegenstandes ist es, ein Antriebssystem, wie es im gattungsbildenden Teil des ersten Patentanspruches beschrieben ist, dahingehend weiterzubilden, daß die einzelnen Bauteile des-Antriebssystems weitestgehend wartungsfrei ausgebildet werden, wobei gleichzeitig die Sicherheit von Rolltreppen und Rollsteigen erhöht und die Lärmbelästigung reduziert wird.

Dieses Ziel wird durch die Kombination folgender Merkmale erreicht:
- die Kettenbolzen sind durch galvanisch beschichtete einsatzgehärtete Stahlbolzen gebildet,
- die Buchsen bestehen aus einem einsatzgehärteten Vergütungsstahl und sind galvanisch beschichtet,
- zwischen den Kettenbolzen und den Buchsen erstreckt sich mindestens ein Gleitlager, das aus einer dünnwandigen, aus thermoplastischen Materialien bestehenden Kunststoffbuchse homogenen Aufbaus gebildet ist.

Vorteilhafte Weiterbildungen des Erfindungsgegenstandes sind den Unteransprüchen zu entnehmen.

Durch Verwendung der aufgezeigten Werkstoffpaarung, nämlich für die Kettenbolzen mit einer außenstromlos aufgebrachten Nickelbeschichtung, ggf. mit Einbettung von Festschmierstoffen aus PTFE, Graphit oder dgl. in Verbindung mit einer ebenfalls außenstromlos nickelbeschichteten Buchse, die ggf. in der Beschichtung auch Festschmierstoffanteile aus PTFE, Graphit oder dgl . aufweisen kann, sowie die Zwischenschaltung eines ggf. mehrteiligen Gleitlagers aus einem ggf. faserverstärkten thermoplastischen Werkstoff, der in Abhängigkeit vom Anwendungsfall ebenfalls eingelagerte Festschmierstoffanteile beinhalten kann, wird ein wartungsfreies Antriebssystem gebildet, das den Anforderungen des Umweltschutzes entspricht und gleichzeitig zu einer nicht unerheblichen Geräuschreduzierung beiträgt.

In Abhängigkeit vom Einsatzfall kann es sich als vorteilhaft erweisen, zwischen dem Kettenbolzen und dem Gleitlager einen Initialschmierstoff, vorzugsweise ein Fett, einzubringen, das vor der Montage als dünner Film auf den Kettenbolzen aufgebracht wird.

Gegenüber den im St.d.T. verwendeten, zwangsläufig zu schmierenden Stahlbolzen und Stahlbuchsen wird durch den Erfindungsgegenstand eine optimale Materialkombination erreicht, zumal eine gute Härte der Kettenbolzen bei gleichzeitiger Rostfreiheit derselben erzeugt wird und die Reduzierung der Buchsenrauhigkeit das tribologische System günstig gestaltet.

Rolltreppen und Rollsteige unterscheiden sich von ihrem konstruktiven Aufbau lediglich geringfügig für den Einsatz im Innen- bzw. im Außenbereich, wobei im Außenbereich durch atmosphärische Einflüsse erhöhte Anforderungen gegenüber dem Innenbereich gegeben sind.

Im Innenbereich kommen in der Regel Rolltreppen oder Rollsteige zum Einsatz, bei den zwischen den Innenlaschen im Bereich der Trittstufen bzw. der Wagenpaletten mit Wälzlagern versehene Laufrollen auf den Buchsen angeordnet sind und die seitliche Abdichtung durch zwischen Innen- und Außenlaschen vorgesehene scheibenförmige Dichtelemente erfolgt. Eine derartige Konstruktion beinhaltet auch die EP-A 94 110. In Weiterbildung dieses St.d.T. wird vorgeschlagen, die scheibenförmigen Dichtelemente aus selbstschmierenden Materialien, wie z.B. aus PTFE (Polytetrafluoräthylen), zu bilden, zumal diese Dichtelemente einer von außen zugeführten Schmierung nicht bedürfen. Die Dichtelemente sind sowohl für die axial längeren mit den Trittstufen bzw. Wagenpaletten verbundenen Kettenbolzen als auch mit den die weiteren Gelenke bildenden zwischen den axial längeren angeordneten axial kürzeren Kettenbolzen vorgesehen und werden vorzugsweise zwischen den Innen- und Außenlaschen auf den jeweiligen Kettenbolzen aufgepreßt. Die zwischen den Innenlaschen und dem Lagerinnenring der Laufrolle vorgesehenen Distanzstücke bilden hierbei ein zusätzliches Dichtelement. Das Wälzlager der Laufrollen ist vorzugsweise lebensdauergeschmiert und nach außen abgedichtet und zum Zweck einer weiteren Geräuschreduzierung von einem Polyamidkern umgeben, insbesondere umspritzt, der wiederum mit einer Lauffläche aus Polyurethan ummantelt ist. Als Initialschmierstoff für im Innenbereich zum Einsatz gelangende Rolltreppen und Rollsteige bietet sich ein Fett mit einem Polyalfaolefin-Basisöl an.

Bei den sogenannten im Außenbereich zum Einsatz gelangenden Verkehrstreppen sind im Bereich der Trittstufen bzw. der Palettenwagen außerhalb der Außenlaschen auf den zugehörigen Bolzen Laufrollen aufgebracht, wobei die seitliche Abdichtung durch zwischen den Innen- und den Außenlaschen vorgesehene Dichtelemente erfolgt. Derartige Transportketten sind ebenfalls in der EP-A 94 110 beschrieben. In Weiterbildung dieses St.d.T. sind zwischen den Innen- und den Außenlaschen im Querschnitt winkelförmige Bauteile mit aufeinander zu gerichteten, Labyrinthe bildenden Axialschenkeln vorgesehen, die jeweils ein in axialer Richtung wirkendes, auf dem jeweiligen Buchsenende aufgepreßtes Dichtelement zumindest teilweise axial übergreifen. Zur Vereinheitlichung des Antriebssystems sind die Bauteile in Verbindung mit den Dichtelementen, in Längsrichtung der Transportketten gesehen, im Bereich sowohl der axial längeren als auch der axial kürzeren Kettenbolzen vorgesehen und auf dieselben aufgepreßt. Die jeweiligen Radialschenkel der Bauteile liegen hierbei an den zugehörigen Schenkeln der Außenlaschen an. Als Initialschmierstoff für im Außenbereich zum Einsatz gelangende Rolltreppen und Rollsteige bietet sich ein Fett mit einem Polyglycol-Basisöl an, wobei die Auswahl des Fettes von den jeweiligen Einflüssen abhängig gemacht wird.

Das Dichtelement weist vorzugsweise eine in axialer Richtung wirkende Dichtlippe auf, die ggf. unter Eigenspannung an dem zugehörigen Radialschenkel des Bauteiles anliegt, wobei die Bauteile entweder aus rostfreiem Stahl oder aber aus Kunststoff bestehen können. Die Dichtlippe sorgt in Verbindung mit dem ein Labyrinth bildenden Axialschenkel des Bauteiles dafür, daß kein Fett aus der Initialschmierung nach außen gelangen kann.

Zur Vermeidung von Schmutzeintritt von außen in den Bereich des Gleitlagers wird das Dichtelement vorzugsweise mit einem Schmierfett entsprechender Viskosität umgeben, welches dann auch gleichzeitig das Schmiermittel für die Dichtlippe bildet.

Wie bereits angesprochen, ist bei den sogenannten Verkehrstreppen die Laufrolle nicht zwischen den Innenlaschen sondern außerhalb der Laschen auf den Bolzen vorgesehen, wobei dann zwischen den Innenlaschen eine sogenannte Schonrolle auf die Buchsen aufgebracht wird, die mit entsprechenden Ausnehmungen eines Kettensterns als Umlenkelement in dem jeweiligen Endbereich der Rolltreppe bzw. des Rollsteiges zusammenwirkt. In Abhängigkeit von der Förderhöhe sowie den damit auftretenden Belastungen kann die Schonrolle entweder aus einem Kunststoff oder aber aus Stahl bestehen, wobei in letzterem Fall zwischen der Schonrolle und der Buchse noch ein Gleitlager vorgesehen werden kann, das vorzugsweise die gleiche Materialspezifikation wie das Gleitlager zwischen Buchse und Kettenbolzen beinhaltet. Dieses zusätzliche Gleitlager wird wiederum nach außen durch ggf. scheibenförmige Dichtungen abgeschlossen, die ebenfalls aus einem selbstschmierenden Material bestehen können. Auch hier kann bei Bedarf eine Initialschmierung der betroffenen Bauteile vorgenommen werden.

Einem weiteren Gedanken der Erfindung gemäß sind auch die Laschen in Abhängigkeit des Anwendungsbereiches mit einem Korrosionsschutz versehen, der bei den herkömmlichen Transportketten durch die ohnehin gegebene ständige Schmierung bisher nicht notwendig war. Bei im Innenbereich zum Einsatz gelangenden Rolltreppen und Rollsteigen werden die Laschen vorzugsweise galvanisch verzinkt bzw. mit einem lackartigen Korrosionsschutz versehen, während bei im Außenbereich zum Einsatz gelangenden Rolltreppen bzw. Rollsteigen die Laschen rostschutzbehandelt, z.B. feuerverzinkt, werden.

Darüber hinaus sind die mit den Laufrollen bestückten axial längeren Kettenbolzen in mit jeweils einer Längsbohrung versehenen Achsstummeln der zugehörigen Trittstufen bzw. Palettenwagen drehbar gelagert, wobei das Lager ebenfalls durch ein initialgeschmiertes Gleitlager gebildet wird. Auch hier erscheint es zweckmäßig, ein Gleitlager zu verwenden, daß die gleiche Materialspezifikation wie die bereits voran beschriebenen Gleitlager aufweist.

In Abhängigkeit vom Einsatzfall kann das Gleitlager außerhalb der Bohrung einen radial umlaufenden Dichtbereich aufweisen, der sich radial zwischen dem freien Ende des Achsstummels und der zugehörigen Außenlasche erstreckt, oder aber bei Verwendung im Außenbereich kann das Gleitlager nach außen durch ein am freien Ende des Achsstummels angeordnetes Ringelement aus einem selbstschmierenden Material abgedichtet werden.

Durch die vorgeschlagene Merkmalskombination wird ein neuartiges Antriebssystem konzipiert, das sich in beträchtlicher Weise hinsichtlich Wartungsarmut bzw. Wartungsfreiheit vom St.d.T. abhebt und das eine gegenüber herkömmlichen Antriebssystemen erhöhte Standzeit aufweist, wobei Nachschmiermöglichkeiten in der Regel nur für im Außenbereich zum Einsatz gelangende Antriebssysteme notwendig sind, um in Abständen von drei bis fünf Jahren oder länger eine entsprechende Nachschmierung herbeizuführen. Da diese Zeitabstände jedoch sehr groß sind, kann auch hier analog zu den Rolltreppen und Rollsteigen, die im Innenbereich verwendet werden, von einem praktisch wartungsfreien Antriebssystem gesprochen werden.

Das erfindungsgemäße Antriebssystem ist anhand eines Ausführungsbeispieles in der Zeichnung dargestellt und wird wie folgt beschrieben. Es zeigen:
- Figur 1 -: teilweise Darstellung eines Antriebssystems für einen Rollsteig
- Figur 2 -: Querschnitt durch einen axial längeren Kettenbolzen samt Transportkette und Laufrolle für eine Kaufhausrolltreppe
- Figur 3 -: Querschnitt durch einen axial kürzeren Kettenbolzen als ein weiteres Gelenk der Transportkette gemäß Figur 2
- Figur 4 -: Querschnitt durch einen axial längeren Kettenbolzen samt Transportkette und Laufrolle für eine Verkehrsrolltreppe
- Figur 5 -: Querschnitt durch einen axial kürzeren Kettenbolzen als ein weiteres Gelenk der Transportkette gemäß Figur 4
- Figur 6 -: Querschnitt durch ein Kettenglied mit einem weiteren Gleitlager zwischen Buchse und Schonrolle gemäß Figur 5.

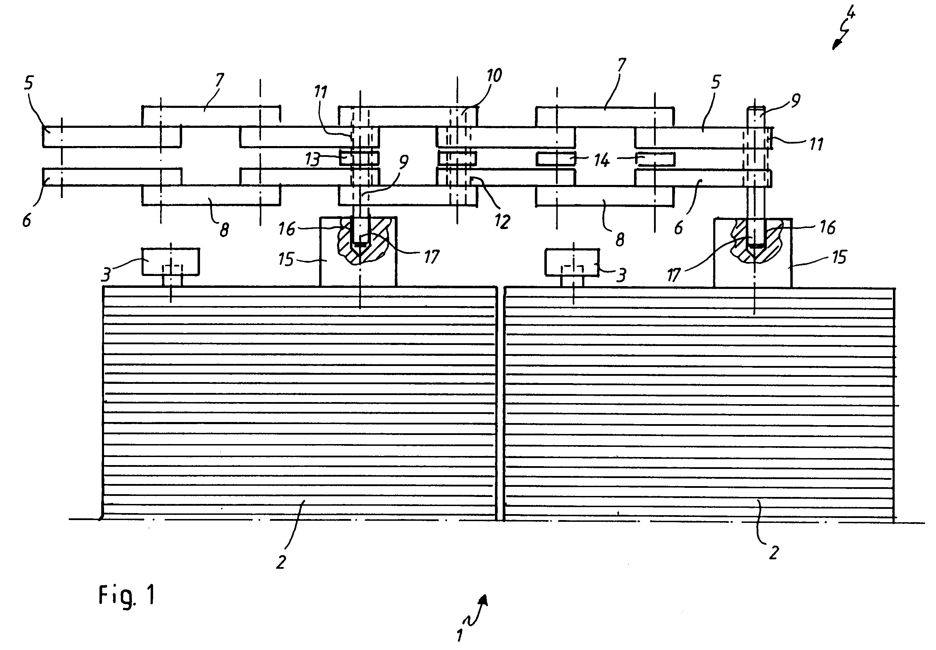

Figur 1 zeigt als Prinzipskizze ein Antriebssystem 1 für einen Rollsteig, das folgende Bauteile beinhaltet:
Wagenpaletten 2 mit zugehörigen Laufrollen 3, die auf nicht weiter dargestellten Schienenprofilen abrollen, sowie eine Transportkette 4, die aus Innenlaschen 5,6 und Außenlaschen 7,8 zusammengesetzt ist, wobei die Innenlaschen 5,6 mit den Außenlaschen 7,8 einerseits über axial längere Kettenbolzen 9 und andererseits über axial kürzere Kettenbolzen 10 miteinander verbunden sind. Sowohl die axial kürzeren Kettenbolzen 10 als auch die axial längeren Kettenbolzen 9 sind von hier nur angedeuteten Buchsen 11,12 umgeben, die zwischen den Außenlaschen 7,8 vorgesehen sind. Auf den Buchsen 11,12 sind hierbei zwischen den Innenlaschen 5,6 geführte Laufrollen 13,14 angeordnet, die ebenfalls auf nicht weiter dargestellten Schienenprofilen abrollen. Die hier nur einseitig dargestellte Transportkette 4 ist in den Endbereichen des Rollsteiges zusammen mit den Wagenpaletten 2 mittels nicht dargestellter Kettenräder umlenkbar. Die Wagenpaletten 2 sind im Bereich der axial längeren Kettenbolzen 9 mit Achsstummeln 15 versehen, in die Längsbohrungen 16 eingebracht sind, die zur Aufnahme der Endbereiche 17 der axial längeren Kettenbolzen 11 dienen. Der hier nur angedeutete konstruktive Aufbau des Antriebssystems 1 ist in den folgenden Figuren näher dargestellt.

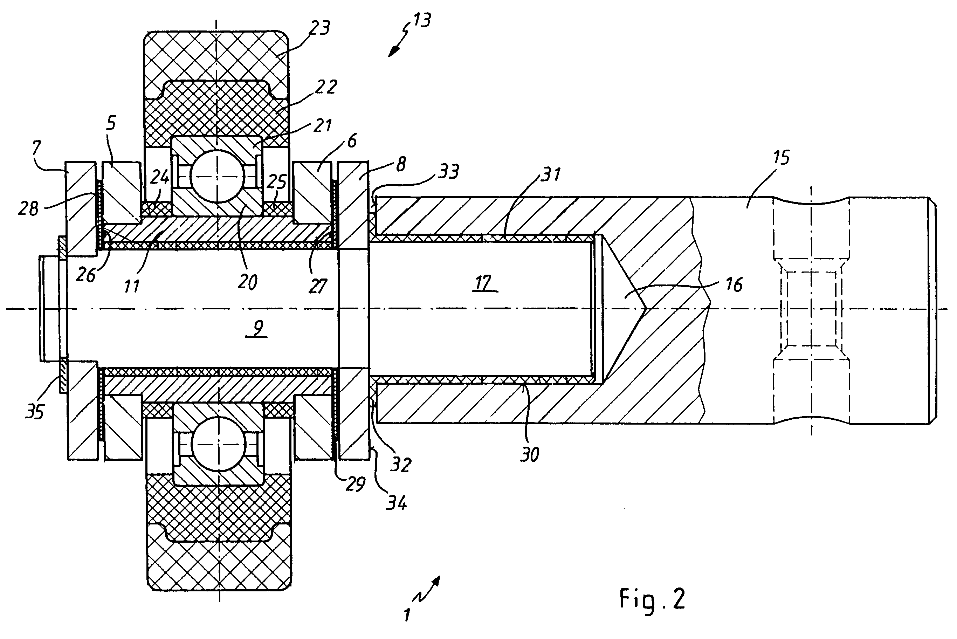

Figur 2 zeigt im Querschnitt einen Teil des Antriebssystems 1. Erkennbar ist der Achsstummel 15 der hier nicht weiter dargestellten Wagenpaletten, der den Endbereich 17 des axial längeren Kettenbolzens 9 aufnimmt. Das hier beschriebene Antriebssystem 1 ist beispielsweise für eine im Innenbereich zum Einsatz gelangende Kaufhausrolltreppe anwendbar. Der Kettenbolzen 9 wird durch einen einsatzgehärteten Stahlbolzen, beispielsweise der Legierung 23 CrMoB 33 E gebildet, der durch ein außenstromloses galvanisches Verfahren mit einer Nickelschicht als Verschleißschutz versehen ist. Der Kettenbolzen 9 wird umgeben von der Buchse 11, die aus einem einsatzgehärteten Vergütungsstahl, beispielsweise der Legierung C15E, besteht, die ebenfalls durch ein außenstromloses galvanisches Verfahren mit einer Nickelschicht überzogen ist. Je nach Anwendungsfall können sowohl die Bolzenbeschichtung als auch die Buchsenbeschichtung Festschmierstoffanteile, beispielsweise aus PTFE, beinhalten. Radial zwischen der Buchse 11 und dem Kettenbolzen 9 ist ein Gleitlager 18 angeordnet, das aus einer dünnwandigen faserverstärkten Kunststoffbuchse homogenen Aufbaus mit eingelagerten Festschmierstoffanteilen besteht. Als Fasern können beispielsweise Langfasermatrix Glasfasern zum Einsatz gelangen, wobei die Buchse selber aus einer thermoplastischen Mischung besteht. Als Initialschmierung wird der Kettenbolzen 9 vor dem Aufpressen des Gleitlagers 18 mit einem Schmierfilm versehen, der ein Fett, bestehend aus einem Polyalfaolefin-Basisöl beinhaltet. Das Antriebssystem 1 weist weiterhin die auf den Kettenbolzen 9 aufgepreßten Außenlaschen 7,8, die auf den Buchsen 11 aufgepreßten Innenlaschen 5,6 sowie die Laufrolle 13, die ein Wälzlager 19 beinhaltet, dessen Lagerinnenring 20 auf der zugehörigen Buchse 11 aufgepreßt ist. Der Lageraußenring 21 ist hierbei von einem Polyamidkern 22 umspritzt, der wiederum mit einer Lauffläche 23 aus Polyurethan ummantelt ist. Zwischen den Innenlaschen 5,6 und dem Lagerinnenring 20 erstrecken sich Distanzstücke 24,25, die neben der axialen Fixierung des Lagers 19 auch eine Dichtstelle bilden. Im Bereich beider Stirnflächen 26, 27 der Buchsen 11 ist jeweils eine Dichtscheibe 28,29 aus PTFE jeweils zwischen den Innen- und Außenlaschen 5,7 bzw. 6,8 angeordnet. Wie bereits angedeutet, ist das freie Ende 17 des axial längeren Kettenbolzens 9 in der Bohrung 16 des Achsstummels 15 drehbar gelagert, wobei auch hier zwischen dem in der Bohrung 16 geführten freien Ende 17 des Kettenbolzens 9 und der zugehörigen Umfangsfläche 30 der Bohrung 16 ein Gleitlager 31 angeordnet ist, das vorzugsweise die gleiche Materialspezifikation wie das Gleitlager 18 aufweist. Auch hier ist der Kettenbolzen 9 im Bereich seines Endes 17 vor dem Einpressen in das Gleitlager 31 mit einem leichten Schmierfilm versehen worden. Das Gleitlager 31 weist einen Radialansatz 32 auf, der sich zwischen der Stirnfläche 33 des Achsstummels 15 und der Stirnfläche 34 der jeweiligen Außenlasche 8 erstreckt und somit gleichzeitig eine Führungs- wie auch eine Dichtfunktion übernimmt. Die Außenlaschen 7 sind nach außen mittels eines Sprengringes 35 gegen Herabrutschen vom Kettenbolzen 9 gesichert.

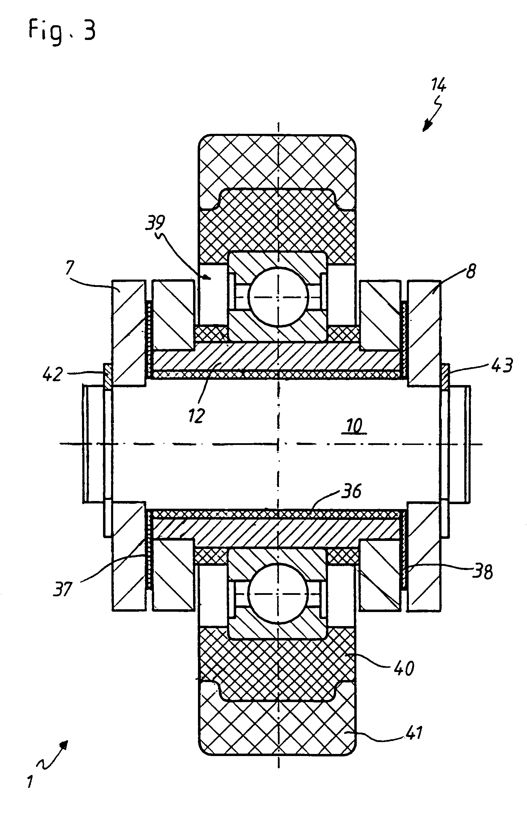

Figur 3 zeigt den Teil des Antriebssystems 1, der zwischen den hier nicht weiter dargestellten axial längeren Kettenbolzen 9 gemäß Figur 2 vorgesehen ist, nämlich die axial kürzeren Kettenbolzen 10 in Verbindung mit den zugehörigen Buchsen 12 sowie den Laufrollen 14. Der Aufbau dieses Bereiches erfolgt analog zu dem des axial längeren Kettenbolzens 9, wobei auch gleiche Materialien zum Einsatz gelangen. Erkennbar ist das Gleitlager 36 sowie die Dichtscheiben 37,38. Die Laufrolle 14 besteht analog zur Laufrolle 13 aus einem Wälzlager 39, das einen Polyamidkern 40 sowie ein Polyurethan-Laufband 41 aufweist. Die beiden Außenlaschen 7,8 werden, da keine axiale Verlängerung des Kettenbolzens 10 vorgesehen ist, durch Sprengringe 42,43 gegen Herabrutschen vom Kettenbolzen 10 gesichert.

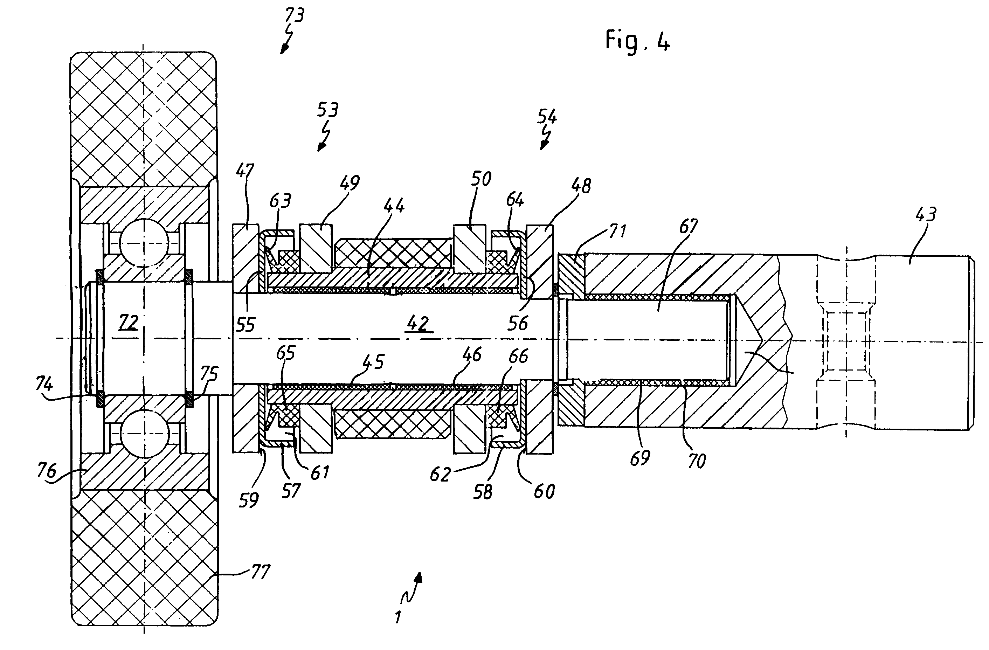

Figur 4 zeigt als Teilansicht eines Antriebssystems 1 einen axial längeren Kettenbolzen 42, der in Wirkverbindung mit dem Achsstummel 43 einer hier nicht weiter dargestellten Trittstufe einer für den Außeneinsatz vorgesehenen Verkehrstreppe steht. Der Kettenbolzen 42 besteht auch hier aus einem einsatzgehärteten Stahl der Legierung 23 CrMoB 33 E, der mit einem Verschleißschutz in Form einer galvanisch aufgebrachten chemischen Nickelschicht versehen ist. Der Kettenbolzen 42 ist von einer Buchse 44 aus einem einsatzgehärteten Vergütungsstahl der Spezifikation C15E umgeben, wobei zwischen dem Kettenbolzen 42 und der Buchse 44 zwei axial hintereinander angeordnete beabstandete Gleitlager 45,46 angeordnet sind. Die dünnwandig ausgebildeten Gleitlager 45,46 bestehen aus einer thermoplastischen Mischung, die eine Langfasermatrix mit eingelagerten Festschmierstoffanteilen beinhaltet. Vor der Montage werden auch diese Kettenbolzen 42 mit einem Schmierfilm versehen, der, wie bereits vorher schon beschrieben, als Basisöl Polyglycol beinhaltet. Auf den Kettenbolzen 42 sind Außenlaschen 47,48 aufgepreßt, während die Innenlaschen 49,50 auf die Buchse 44 aufgedrückt sind. Zwischen den Innenlaschen 49,50 ist auf die Außenumfangsfläche 51 der Buchse 44 eine sogenannte Schonrolle 52 aufgebracht, die in diesem Beispiel aus Kunststoff bestehen soll. In Abhängigkeit von der Förderhöhe der Rolltreppe sowie den damit einhergehenden Belastungen kann die Schonrolle 52 ebenfalls aus Stahl gebildet sein, wobei dann zwischen der Schonrolle 52 und der Buchse 44 ein weiteres hier nicht dargestelltes Gleitlager vorgesehen werden sollte, das eine gleiche oder ähnliche Materialspezifikation beinhaltet wie die Gleitlager 45 und 46.

Zwischen den Außenlaschen 47,48 und den Innenlaschen 49,50 sind topfförmig ausgebildete Bauteile 53,54 vorgesehen, die, im Querschnitt gesehen, jeweils einen Radialschenkel 55,56 und einen Axialschenkel 57,58 aufweisen. Die Radialschenkel 55,56 liegen hierbei an den Stirnflächen 59,60 der Außenlaschen 47,48 an, während die Axialschenkel 57,58 aufeinander zu, d.h. in Richtung der Innenlaschen 49,50 weisen. Innerhalb des so gebildeten Freiraumes 61,62 ist jeweils ein ringförmiges mit einer Dichtlippe 63,64 versehenes Dichtelement 65,66 angeordnet, das jeweils auf einen Endbereich der Buchse 44 aufgepreßt ist und das sich seinerseits an der zugehörigen Innenlasche 49,50 abstützt. Die Dichtlippe 63,64 des jeweiligen Dichtelementes 65,66 liegt hierbei unter Eigenspannung an dem zugehörigen Radialschenkel 55,56 des Bauteiles 53,54 an. Das freie Ende 67 des Kettenbolzens 42 ist hierbei analog zu Figur 2 in einer Bohrung 68 des Achsstummel 43 geführt, wobei auch hier ein Gleitlager 69 gleicher Materialspezifikation wie die Gleitlager 45,46 zwischen der Umfangsfläche 70 der Bohrung 68 und dem Endbereich 67 des Kettenbolzens 42 angeordnet ist. Das Dichtelement wird hierbei durch einen selbstschmierenden Bronzering 71 gebildet, der stirnseitig des Achsstummels 43 vorgesehen und auf das freie Ende 67 des Kettenbolzens 42 aufgepreßt ist. Außerhalb der äußeren Laschen 47 ist auf einem Ansatz 72 des Kettenbolzens 42 die Laufrolle 73 aufgepreßt und mittels Sicherungsringen 74,75 axial fixiert. Die Laufrolle 73 beinhaltet auch hier ein Wälzlager 76, das mit einer Ummantelung 77 versehen ist, die in Abhängigkeit der Belastungen der Verkehrs-treppe unterschiedlichste Materialien aufweisen kann.

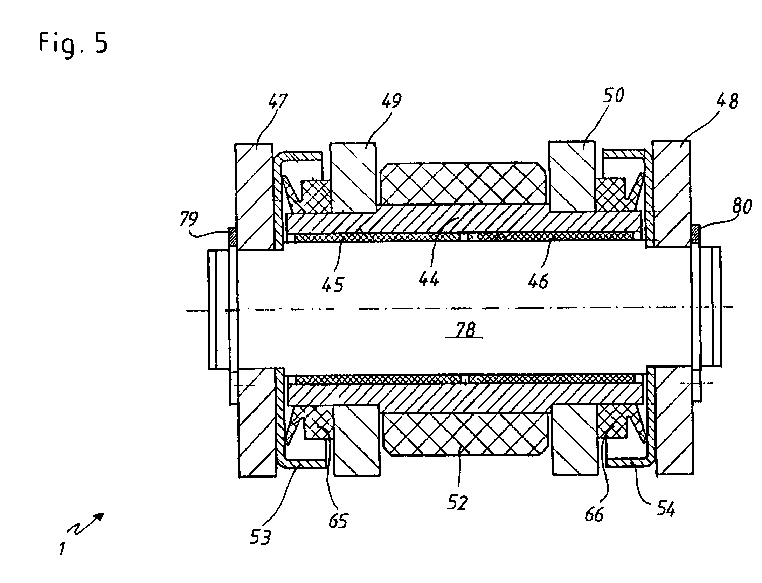

Figur 5 zeigt den Teil des Antriebssystems 1 außerhalb der mit den hier nicht weiter dargestellten Trittstufen verbundenen axial längeren Kettenbolzen 42 gemäß Figur 4. Dargestellt sind hier die Kettenbolzen 78, die die Außenlaschen 47,48 gemäß Figur 4 aufnehmen. Die Innenlaschen 49,50 sind hierbei analog zu Figur 4 auf den Buchsen 44 aufgedrückt. Ferner vorgesehen sind die Gleitlager 45,46 die Schonrolle 52, die topfförmigen Bauteile 53,54 sowie die Dichtelemente 65 und 66. Der konstruktive Aufbau des Kettenbolzens 78 ist mit Ausnahme der hier fehlenden axialen Verlängerung sowie der ebenfalls fehlenden Laufrolle identisch mit dem gemäß Figur 4. Die Außenlaschen 47,48 werden im Hinblick auf die fehlenden Bauteile mittels Sprengringen 79,80 axial fixiert.

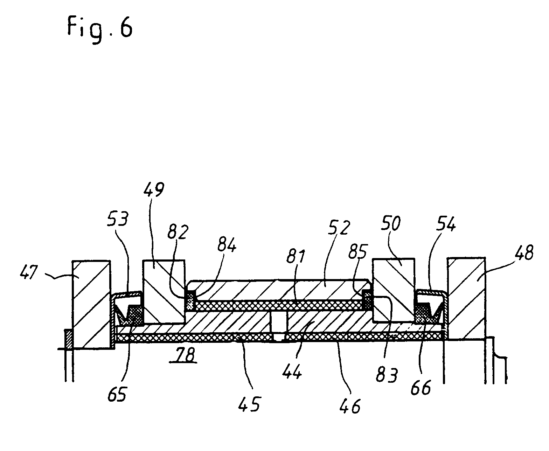

Figur 6 zeigt als Teilansicht einen Querschnitt durch ein Kettenglied, wie es beispielsweise in Figur 5 dargestellt ist. Erkennbar sind die Bauteile Kettenbolzen 78, Gleitlager 45,46, Buchse 44, Schonrolle 52, Bauteile 53,54, Dichtelemente 65,66, Außenlaschen 47,48 sowie Innenlaschen 49,50. Unterschiedlich zu Figur 5 ist, daß zwischen der Buchse 44 und der in diesem Beispiel aus Stahl besteherden Schonrolle 52 ein weiteres Gleitlager 81 vorgesehen ist, da stirnseitig durch aus PTFE bestehende scheibenförmige Dichtungen 82,83 abgeschlossen ist. Die Dichtungen 82,83 sind in Nuten 84,85 der Schonrolle 52 eingesetzt und stützen sich im Bereich ihrer freien Stirnfläche an den zugehörigen Innenlaschen 49,50 ab. Das Gleitlager 81 weist vorteilhafterweise die gleiche Materialspezifikation wie die anderen Gleitlager 45,46 auf, wobei auch hier eine Initialschmierung der betroffenen Bauteile vorgenommen werden kann.

## Patentansprüche

1. Antriebssystem für die Trittstufen und Wagenpaletten (2) von Rolltreppen und Rollsteigen, bestehend aus jeweils einer seitlich der Trittstufen bzw. Wagenpaletten (2) angeordneten Transportkette (4), die eine Vielzahl von mit Buchsen (11,12,44) zusammenwirkenden Kettenbolzen (9,10,42,78) unterschiedlicher axialer Länge beinhaltet, wobei die axiale längeren, jeweils mit einer Laufrolle (13,73) bestückten Kettenbolzen (9,42) im Bereich der Trittstufen bzw. Wagenpaletten (2) vorgesehen und mit diesen ggf. über weitere Bauelemente verbunden sind, ferner eine Vielzahl von mit den axial kürzeren Kettenbolzen (10,78) und Buchsen (12,44) sowie ggf. ebenfalls mit Laufrollen (14) zusammenwirkenden Laschen (5,6,7,8,47,48,49,50) beinhaltet, die als Innenlaschen (5,6,49,50) drehfest mit den Buchsen (11,12,44) und als Außenlaschen (7,8,47,48) drehfest mit den Kettenbolzen (9,10,42,78) verbunden sind, wobei im Bereich beider Stirnseiten (26,27) der Buchsen (9) Dichtelemente (28,29) vorgesehen sind, gekennzeichnet durch die Kombination folgender Merkmale:
- die Kettenbolzen (9,10,42,78) sind durch galvanisch beschichtete einsatzgehärtete Stahlbolzen gebildet,
- die Buchsen (11,12,44) bestehen aus einem einsatzgehärteten Vergütungsstahl und sind galvanisch beschichtet,
- zwischen den Kettenbolzen (9,10,42,78) und den Buchsen (11,12,44) erstreckt sich mindestens ein Gleitlager (18,36,45,46), das aus einer dünnwandigen, aus thermoplastischen Materialien bestehenden Kunststoffbuchse homogenen Aufbaus gebildet ist.

2. Antriebssystem nach Anspruch 1, dadurch gekennzeichnet, daß die Kettenbolzen (9,10,42,78) mit einer Nickelbeschichtung versehen sind.

3. Antriebssystem nach den Ansprüchen 1 und 2, dadurch gekennzeichnet, daß die Beschichtung außenstromlos aufgebracht ist.

4. Antriebssystem nach den Ansprüchen 1 bis 3, dadurch gekennzeichnet, daß in der Beschichtung Festschmierstoffe, insbesondere PTFE, eingebettet sind.

5. Antriebssystem nach den Ansprüchen 1 bis 4, dadurch gekennzeichnet, daß die Buchsen (11,12,44) mit einer Nickelbeschichtung versehen sind.

6. Antriebssystem nach den Ansprüchen 1 bis 5, dadurch gekennzeichnet, daß die Beschichtung außenstromlos aufgebracht ist.

7. Antriebssystem nach den Ansprüchen 1 bis 6, dadurch gekennzeichnet, daß in der Beschichtung Festschmierstoffe, insbesondere PTFE eingebettet sind.

8. Antriebssystem nach den Ansprüchen 1 bis 7, dadurch gekennzeichnet, daß die das Gleitlager (18,36,45,46) bildende Kunststoffbuchse faserverstarkt ist.

9. Antriebssystem nach den Ansprüchen 1 bis 8, dadurch gekennzeichnet, daß das Gleitlager (18,36,45,46) eingelagerte Festschmierstoffanteile beinhaltet.

10. Antriebssystem nach den Ansprüchen 1 bis 9, dadurch gekennzeichnet, daß das Gleitlager (45,46), in axialer Richtung gesehen, zweigeteilt ausgebildet ist.

11. Antriebssystem nach den Ansprüchen 1 bis 10, dadurch gekennzeichnet, daß zumindest zwischen den Kettenbolzen (9,10,42,78) und dem Gleitlager (18,36,45,46) ein Initialschmierstoff vorgesehen ist.

12. Antriebssystem nach den Ansprüchen 1 bis 11, dadurch gekennzeichnet, daß der Initialschmierstoff ein Fett ist.

13. Antriebssystem nach den Ansprüchen 1 bis 12, dadurch gekennzeichnet, daß das Fett ein Polyalfaolefin-Basisöl beinhaltet.

14. Antriebssystem nach den Ansprüchen 1 bis 12, dadurch gekennzeichnet, daß das Fett ein Polyglycol-Basisöl beinhaltet.

15. Antriebssystem nach den Ansprüchen 1 bis 14, dadurch gekennzeichnet, daß zwischen den Innenlaschen (5,6) im Bereich der Trittstufen bzw. der Wagenpaletten (2) mit Wälzlagern (19) versehene Laufrollen (13) auf den Buchsen (11) angeordnet sind und die seitliche Abdichtung durch zwischen Innen-(5,6) und Außenlaschen (7,8) vorgesehene scheibenförmige Dichtelemente (28,29) erfolgt, wobei die Dichtelemente (28,29) aus selbstschmierenden Materialien gebildet sind.

16. Antriebssystem nach Anspruch 15, dadurch gekennzeichnet, daß die Dichtelemente (28,29) aus PTFE gebildet sind.

17. Antriebssystem nach den Ansprüchen 15 und 16, dadurch gekennzeichnet, daß die Dichtelemente (28,29), in Längsrichtung der jeweiligen Transportkette (4) gesehen, auch außerhalb der mit Laufrollen (13) bestückten axial längeren Kettenbolzen (9) zwischen den Innen- (5,6) und Außenlaschen (7,8) auf den jeweiligen axial kürzeren Kettenbolzen (10) aufgepreßt sind.

18. Antriebssystem nach den Ansprüchen 15 bis 17, dadurch gekennzeichnet, daß die Laufrollen (12,14,73) lebensdauergeschmierte nach außen abgedichtete Wälzlager (19,39,76) beinhalten.

19. Antriebssystem nach den Ansprüchen 15 bis 18, dadurch gekennzeichnet, daß das Wälzlager (19,39) der Laufrollen (13,14) von einem Polyamidkern (22,40) umgeben, insbesondere umspritzt ist, der wiederum mit einer Lauffläche (23,41) aus Polyurethan ummantelt ist.

20. Antriebssystem nach den Ansprüchen 15 bis 19, dadurch gekennzeichnet, daß zwischen den Innenlaschen (5,6) und dem Lagerinnenring (20) eine weitere Dichtstelle bildende Distanzstücke (24,25) vorgesehen sind.

21. Antriebssystem nach den Ansprüchen 1 bis 14, dadurch gekennzeichnet, daß im Bereich der Trittstufen bzw. der Wagenpaletten (2) außerhalb der Außenlaschen (47) auf den zugehörigen Kettenbolzen (42) Laufrollen (73) vorgesehen sind und die seitliche Abdichtung durch zwischen den Innen- (49,50) und den Außenlaschen (47,48) vorgesehene Dichtelemente (65,66) erfolgt, wobei zwischen den Innen- (49,50) und den Außenlaschen (47,48) im Querschnitt winkelförmige Bauteile (53,54) mit aufeinander zu gerichteten Axialschenkeln (57,58) vorgesehen sind, die jeweils ein in axialer Richtung wirkendes, auf dem jeweiligen Buchsenende aufgepreßtes Dichtelement (65,66), ein Labyrinth bildend, zumindest teilweise axial übergreifen.

22. Antriebssystem nach Anspruch 21, dadurch gekennzeichnet, daß das jeweilige Bauteil (53,54) auf den Kettenbolzen (42,78) mit axialem Abstand zu den Stirnflächen der Buchsen (44) aufgepreßt ist und mit seinem Radialschenkel (55,56) an der zugehörigen Außenlaschen (47,48) anliegt.

23. Antriebssystem nach den Ansprüchen 21 und 22, dadurch gekennzeichnet, daß das Dichtelement (65,66) eine Dichtlippe (63,64) aufweist, die ggf. unter Eigenspannung an dem Radialschenkel (55,56) des Bauteiles (53,54) anliegt.

24. Antriebssystem nach den Ansprüchen 21 bis 23, dadurch gekennzeichnet, daß die Bauteile (53,54) in Verbindung mit den Dichtelementen (65,66), in Längsrichtung der jeweiligen Transportkette (4) gesehen, auch außerhalb der mit Laufrollen (73) bestückten Kettenbolzen (42) zwischen den Innen- (49,50) und den Außenlaschen (47,48) vorgesehen und auf die zugehörigen Kettenbolzen (42,78) aufgepreßt sind.

25. Antriebssystem nach den Ansprüchen 21 bis 24, dadurch gekennzeichnet, daß die Bauteile (53,54) aus rostfreiem Stahl bestehen.

26. Antriebssystem nach den Ansprüchen 21 bis 24, dadurch gekennzeichnet, daß die Bauteile (53,54) aus Kunststoff bestehen.

27. Antriebssystem nach den Ansprüchen 21 bis 26, dadurch gekennzeichnet, daß im Freiraum (61,62) zwischen den Bauteilen (53,54) und den Dichtelementen (65,66) Schmierfett eingebracht ist.

28. Antriebssystem nach den Ansprüchen 21 bis 27, dadurch gekennzeichnet, daß die jeweilige Buchse (44) von einer Schonrolle (52) umgeben ist.

29. Antriebssystem nach den Ansprüchen 21 bis 28, dadurch gekennzeichnet, daß die Schonrolle (52) aus einem Kunststoff besteht.

30. Antriebssystem nach den Ansprüchen 21 bis 28, dadurch gekennzeichnet, daß die Schonrolle (52) aus Stahl besteht und sich über ein Gleitlager (81) auf der zugehörigen Buchse (44) abstützt.

31. Antriebssystem nach Anspruch 30, dadurch gekennzeichnet, daß das Gleitlager (81) im Bereich seiner beiden Stirnflächen nach außen jeweils durch eine Dichtung (82,83) abgeschlossen ist.

32. Antriebssystem nach den Ansprüchen 30 und 31, dadurch gekennzeichnet, daß die Dichtung (82,83) durch eine Scheibe gebildet ist, die in eine Nut (84,85) im Bereich der jeweiligen Stirnfläche der Schonrolle (52) eingesetzt ist und sich mit ihrer freien Stirnfläche an der zugehörigen Innenlasche (49,50) abstützt.

33. Antriebssystem nach den Ansprüchen 30 bis 32, dadurch gekennzeichnet, daß das Gleitlager (81) die gleiche Materialspezifikation wie das zwischen den Kettenbolzen (42,78) und den Buchsen (44) verwendete Gleitlager (45,46) aufweist.

34. Antriebssystem nach den Ansprüchen 1 bis 33, dadurch gekennzeichnet, daß die Laschen (5,6,7,8) bei Einsatz der Rolltreppen bzw. Rollsteige im Innenbereich galvanisch verzinkt bzw. mit einem lackartigen Korrosionsschutz versehen sind.

35. Antriebssystem nach den Ansprüchen 1 bis 34, dadurch gekennzeichnet, daß die Laschen (47,48,49,50) bei Einsatz der Rolltreppen bzw. Rollsteige im Außenbereich rostschutzbehandelt, insbesondere feuerverzinkt, sind.

36. Antriebssystem nach den Ansprüchen 1 bis 35, dadurch gekennzeichnet, daß die mit den Laufrollen (13,73) bestückten axial längeren Kettenbolzen (9,42) in mit jeweils einer Längsbohrung (30,68) versehenen Achsstummeln (15,43) der zugehörigen Trittstufen bzw. Wagenpaletten (2) drehbar gelagert sind.

37. Antriebssystem nach Anspruch 36, dadurch gekennzeichnet, daß das Lager (31,69) durch ein initialgeschmiertes Gleitlager gebildet ist.

38. Antriebssystem nach den Ansprüchen 36 und 37, dadurch gekennzeichnet, daß das Gleitlager (31,69) die gleiche Materialspezifikation wie die zwischen den Kettenbolzen (9,42) und den Buchsen (11,44) angeordneten Gleitlager (18,45,46) aufweist.

39. Antriebssystem nach den Ansprüchen 36 bis 38, dadurch gekennzeichnet, daß das Gleitlager (31) außerhalb der Bohrung (30) einen radial umlaufenden Dichtbereich (32) aufweist, der sich radial zwischen dem freien Ende (33) des Achsstummels (15) und der zugehörigen Außenlasche (8) erstreckt.

40. Antriebssystem nach den Ansprüchen 36 bis 39, dadurch gekennzeichnet, daß das Gleitlager (69) nach außen durch ein am freien Ende des Achsstummels (43) angeordnetes Ringelement (71) aus einem selbstschmierenden Material abgedichtet ist.

## Claims

1. A drive system for the steps and carriage plates (2) of escalators and moving pavements, respectively comprising a transport chain (4) disposed laterally of the steps or carriage plates (2), and which contains a plurality of chain bolts (9,10,42,78) of differing axial lengths cooperating with bushes (11,12,44), the axially longer chain bolts (9,42), each fitted with a runner roller (13,73) being provided in the area of the steps or carriage plates (2) and being connected therewith if necessary via further components₁ furthermore Containing a plurality of lugs (5,6,7,8,47,48,49,50) co-operating with the axially shorter chain bolts (10,78) and bushes (12,44) and if necessary likewise with runner rollers (14), and which are securely connected as inner lugs (5,6,49,50) in a non-rotary manner to the bushes (11,12,44) and are connected as outer lugs (7,8,47,48) in a non-rotary manner to the chain bolts (9,10,42,78), seal members (28,29) being provided in the area of both end faces (26,27) of the bushes (9), characterized by the combination of the following features:
- the chain bolts (9,10,42,78) are formed by electrolytically coated case-hardened steel bolts,
- the bushes (11,12,44) consist of a case-hardened tempering steel and are electroplated₁
- there extends between the chain bolts (9,10,42,78) and the bushes (11,12,44) at least one sliding bearing (18,36,45,46), which is formed from a thin-walled plastics bush of homogenous structure consisting of thermoplastic materials.

2. Drive system according to claim 1, characterised in that the chain bolts (9,10,42,78) are provided with a nickel coating.

3. Drive system according to claim 1 and 2, characterised in that the coating is applied in an externally electroless manner.

4. Drive system according to claims 1 to 3, characterised in that solid lubricants. particularly PTFE are embedded in the coating.

5. Drive system according to claims 1 to 4, characterised in that the bushes (11,12,44) are provided with a nickel coating.

6. Drive system according to claims 1 to 5, characterised in that the coating is applied in an external electroless manner.

7. Drive system according to claims 1 to 6, characterised in that solid lubricants, particularly PTFE, are embedded in the coating.

8. Drive system according to claims 1 to 7, characterised in that the plastic bush forming the sliding bearing (18,36,45,46) is fibre-reinforced.

9. Drive system according to claims 1 to 8, characterised in that the sliding bearing (18,36,45,46) contains embedded solid lubricant components.

10. Drive system according to claims 1 to 9, characterised in that the sliding bearing (45,46), seen in the axial direction, is formed in two parts.

11. Drive system according to claims 1 to 10, characterised in that a primary lubricant is provided at least between the chain boles (9,10,42,78) and the sliding bearing (18,36,45,46).

12. Drive system according to claims 1 to 11, characterised in that the primary lubricant is a grease.

13. Drive system according to claims 1 to 12, characterised in that the grease contains a polyalfaolefine base oil.

14. Drive system according to claims 1 to 12, characterised in that the grease is a polyglycol base oil.

15. Drive system according to claims 1 to 14, characterised in that there are disposed between the inner lugs (5,6) in the area of the steps of the carriage plates (2), runner rollers (13) provided with roller bearings (19) on the bushes (11) and the lateral seal is effected by disc-shaped seal members (28,29) provided between the inner (5,6) and outer lugs (7,8), the seal members (28,29) being formed from self-lubricating materials.

16. Drive system according to claim 15, characterised in that the seal members (28,29) are formed from PTFE.

17. Drive system according to claims 15 and 16, characterised in that the seal members (28,29), seen in the longitudinal direction of the respective transport chain (4), are pressed also, outwith the axially longer chain bolts (9) fitted with runner rollers (13), between the inner (5,6) and outer lugs (7,8) on to the respectively axially shorter chain bolt (10).

18. Drive system according to claims 15 to 17, characterised in that the runner rollers (12,14,73) contain externally sealed roller bearings (19,39,76) which are lubricated for life.

19. Drive system according to claims 15 to 18, characterised in that a polyamide core (22,40) surrounds, in particular is cast around the roller bearing (19,39) of the runner rollers (13,14), said polyamide core in turn being jacketed by a running surface (23,41) of polyurethane.

20. Drive system according to claims 15 to 19, characterised in that there are provided between the inner lugs (5,6) and the bearing inner ring (20), spacers (24,25) forming a further seal point.

21. Drive system according to claims 1 to 14, characterised in that, in the area of the steps or carriage plates (2) outwith the outer lugs (47), runner rollers (73) are provided on the associated chain bolts (42), and the lateral seal is effected by seal members (65,66) provided between the inner (49,50) and the outer lugs (47,48), components (53,54) angled in cross-section with axial arms (57,58) aligned towards one another are provided between the inner (49,50) and the outer lugs (47,48), said axial arms at least partly axially extending over a seal member (65,66), acting in the axial direction, pressed on to the respective bush ends and forming a labyrinth.

22. Drive system according to claim 21, characterised in that the respective component (53,54) is pressed with an axial spacing from the end faces of the bushes (44) and bears with its radial arm (55,56) on the associated outer lugs (47,48).

23. Drive system according to claims 21 and 22, characterised in that the seal member (65,66) has a seal lip (63,64), which bears on the radial arm (55,56) of the component (53,54), if necessary under internal stress.

24. Drive system according to claims 21 to 23, characterised in that the components (53,54) in conjunction with the seal members (65,66), seen in the longitudinal direction of the respective transport chain (4), are also provided outwith the chain bolts (42) fitted with runner rollers (73), between the inner (49,50) and the outer lugs (47,48), and are pressed on to the associated chain bolts (42,78).

25. Drive system according to claims 21 to 24, characterised in that the components (53,54) consist of stainless steel.

26. Drive system according to claims 21 to 24, characterised in that the components (53,54) consist of plastic.

27. Drive system according to claims 21 to 26, characterised in that a lubricating grease is inserted in the free space (61,62) between the components (53,54) and the seal members (65,66).

28. Drive system according to claims 21 to 27, characterised in that the respective bush (44) is surrounded by a protective roller (52).

29. Drive system according to claims 21 to 28, characterised in that the protective roller (52) consists of a plastic material.

30. Drive system according to claims 21 to 28, characterised in that protective roller (52) consists of steel and is supported via a sliding hearing (81) on the associated bush (44).

31. Drive system according to claim 30, characterised in that sliding bearing (81) is closed from the outside in the area of its two end surfaces by respective seals (82,83).

32. Drive system according to claims 30 and 31, characterised in that the seal (82,83) is formed by a disc which is inserted in a groove (84,85) in the area of the respective end face of the protective roller (52) and is supported with its free end face on the associated inner lug (49,50).

33. Drive system according to claims 30 to 32, characterised in that the sliding bearing (81) has the same material specification as the sliding bearing (45,46) used between the chain bolts (42,78) and the bushes (44).

34. Drive system according to claims 1 to 33, characterised in that the lugs (5,6,7,8), upon use of the escalators or moving pavements, are galvanized or provided with a varnish-like anti-corrosion covering in the inner area.

35. Drive system according to claims 1 to 34, characterised in that the lugs (47,48,49,50), during use of the escalators or moving pavements, have an anti-rust treatment in the outer area, and in particular are hot-galvanised.

36. Drive system according to claims 1 to 35, characterised in that the axially longer chain bolts (9,42) fitted with the runner rollers (13,73) are rotatably mounted in axle stubs (15,43), each provided with a longitudinal bore (30,68), of the associated steps or carriage plates (2).

37. Drive system according to claim 36, characterised in that the bearing (31,69) is famed by a sliding bearing which has primary lubrication.

38. Drive system according to claims 36 and 37, characterised in that the sliding bearings (31,69) have the same material specification as the sliding bearings (18,45,46) disposed between the chain bolts (9,42) and the bushes (11,44).

39. Drive system according to claims 36 to 38, characterised in that the sliding bearing (31) has, outwith the bore (30) a radially surrounding seal area (32), which extends radially between the free end (33) of the axial stub (15) and the associated outer lug (8).

40. Drive system according to claims 36 to 39, characterised in that the sliding bearing (69) is sealed off from the outside by an annular member (71) disposed at the free end of the axle stub (43), and consisting of a self-lubricating material.

## Revendications

1. Système d'entraînement pour les marches et les palettes (2) d'escaliers mécaniques et de trottoirs roulants, constitué par respectivement une chaîne de transport (4), qui est disposée latéralement par rapport aux marches et aux palettes (2) et qui contient des tourillons de chaîne (9, 10, 42, 78), ayant différentes longueurs axiales et qui coopèrent avec une multiplicité de manchons (11, 12, 44), et dans lequel les tourillons de chaîne plus longs axialement (9, 42), qui sont équipés chacun d'un galet de roulement (13, 73), sont prévus dans la zone des marches ou des palettes (2) et sont reliés à ces dernières éventuellement par l'intermédiaire d'autres composants, et comportent en outre une multiplicité de pattes (5, 6, 7, 8, 47, 48, 49, 50), qui coopèrent avec les tourillons de chaîne les plus courts axialement (10, 78) et les manchons (12, 44) ainsi qu'éventuellement également avec des galets de roulement (14), et parmi lesquelles les pattes intérieures (5, 6, 49, 50) sont reliées avec blocage en rotation aux manchons (11, 12, 44) tandis que les pattes extérieures (7, 8, 47, 48) sont reliées avec blocage en rotation aux tourillons de chaîne (9, 10, 42, 78), et dans lequel des éléments d'étanchéité (28, 29) sont prévus dans la zone de deux faces frontales (26, 27) des douilles (9), caractérisé par la combinaison de caractéristiques suivantes :
- les tourillons de chaîne (9, 10, 42, 78) sont formés par des tourillons d'acier durcis par cémentation et pourvus d'un revêtement galvanique,
- les manchons (11, 12, 44) sont constitués par un acier de traitement durci par cémentation et sont pourvus d'un revêtement galvanique,
- entre les tourillons de chaîne (9, 10, 42, 78) et les manchons (11, 12, 44) s'étend au moins un palier lisse (18, 36, 45, 46), qui est formé par un manchon en matière plastique à paroi mince, formé par des matières thermoplastiques et possédant une structure homogène.

2. Système d'entraînement selon la revendication 1, caractérisé en ce que les tourillons de chaîne (9, 10, 42, 78) comportent un revêtement de nickel.

3. Système d'entraînement selon les revendications 1 et 2, caractérisé en ce que le revêtement est appliqué sans apport de courant extérieur.

4. Système d'entraînement selon les revendications 1 à 3, caractérisé en ce que des substances lubrifiantes solides, notamment du PTFE, sont noyées dans le revêtement.

5. Système d'entraînement selon les revendications 1 à 4, caractérisé en ce que les manchons (11, 12, 44) sont pourvus d'un revêtement de nickel.

6. Système d'entraînement selon les revendications 1 à 5, caractérisé en ce que le revêtement est appliqué sans apport de courant extérieur.

7. Système d'entraînement selon l'une des revendications 1 à 6, caractérisé en ce que des substances lubrifiantes solides, notamment du PTFE, sont noyées dans le revêtement.

8. Système d'entraînement selon les revendications 1 à 7, caractérisé en ce que le manchon en matière plastique constituant le palier lisse (18, 36, 45, 46) est renforcé par des fibres.

9. Système d'entraînement selon les revendications 1 à 8, caractérisé en ce que le palier lisse (18, 36, 45, 46) contient des parties de substances lubrifiantes solides insérées.

10. Système d'entraînement selon les revendications 1 à 9, caractérisé en ce que le palier lisse (45, 46) est agencé en étant subdivisé en deux parties, lorsqu'on regarde dans la direction axiale.

11. Système d'entraînement selon les revendications 1 à 10, caractérisé en ce qu'une substance lubrifiante initiale est prévue entre les tourillons de chaîne (9, 10, 42, 78) et le palier lisse (18, 36, 45, 46).

12. Système d'entraînement selon les revendications 1 à 11, caractérisé en ce que la substance lubrifiante initiale est une graisse.

13. Système d'entraînement selon les revendications 1 à 12, caractérisé en ce que la graisse est une huile à base de polyalphaoléfine.

14. Système d'entraînement selon les revendications 1 à 12, caractérisé en ce que la graisse contient une huile à base de polyglycol.

15. Système d'entraînement selon les revendications 1 à 14, caractérisé en ce que des galets de roulement (13) pourvus de roulements (19) sont disposés sur les manchons (11) entre les pattes intérieures (5, 6) dans la zone des marches ou des palettes (2), et que l'étanchéité latérale réalisée au moyen d'éléments d'étanchéité (28, 29) en forme de disques, qui sont prévus entre des pattes intérieures (5, 6) et des pattes extérieures (7, 8), les éléments d'étanchéité (28, 29) étant formés de matériaux auto-lubrifiants.

16. Système d'entraînement selon la revendication 15, caractérisé en ce que les éléments d'étanchéité (28, 29) sont formés de PTFE.

17. Système d'entraînement selon les revendications 15 et 15, caractérisé en ce que les éléments d'étanchéité (28, 29) sont serrés également à l'extérieur des tourillons de chaîne les plus longs axialement (9), qui sont équipés de galets de roulement (16), lorsqu'on regarde dans la direction longitudinale de la chaîne de transport respective (4), entre les pattes intérieures (5, 6) et les pattes extérieures (7, 8), sur les tourillons de chaîne respectifs les plus courts axialement (10).

18. Système d'entraînement selon les revendications 15 à 17 caractérisé en ce que les galets de roulement (12, 14, 73) contiennent des roulements (19, 39, 76) lubrifiés à vie et étanchéifiés vis-à-vis de l'extérieur.

19. Système d'entraînement selon les revendications 15 à 18, caractérisé en ce que le roulement (19, 39) des galets de roulement (13, 14) est entouré, notamment enrobé par projection, par un noyau de polyamide (22, 40), qui est à nouveau enveloppé par une surface de roulement (23, 41) en polyuréthane.

20. Système d'entraînement selon les revendications 15 à 19, caractérisé en ce que des entretoises (24, 25) créant une autre zone d'étanchéité sont prévues entre les pattes intérieures (5, 6) et la bague intérieure de palier (20).

21. Système d'entraînement selon les revendications 1 à 14, caractérisé en ce que des galets de roulement (73) sont prévus dans la zone des marches ou des palettes (2) à l'extérieur des pattes extérieures (47), sur les tourillons de chaîne associés (42), et que l'étanchéité latérale est réalisée au moyen d'éléments d'étanchéité (65, 66) prévus entre les pattes intérieures (49, 50) et les pattes extérieures (47, 48), et dans lequel entre les pattes intérieures (49, 50) et les pattes extérieures (47, 48) sont prévus des composants (53, 54) en forme de cornières en coupe transversale, qui comportent des branches axiales (57, 58) dirigées l'une vers l'autre et qui s'engagent au moins partiellement axialement au-dessus respectivement d'un élément d'étanchéité (65, 66) agissant dans la direction axiale et comprimé contre l'extrémité respective d'un manchon, en formant un labyrinthe.

22. Système d'entraînement selon la revendication 21, caractérisé en ce que le composant respectif (53, 54) est repoussé sur les tourillons de chaîne (42, 78) en étant situé à une certaine distance axiale des surfaces frontales des manchons (44) et s'applique par sa branche radiale (55, 56) contre les pattes extérieures associées (47, 48).

23. Système d'entraînement selon les revendications 21 et 22, caractérisé en ce que l'élément d'étanchéité (65, 66) possède une lèvre d'étanchéité (63, 64), qui s'applique éventuellement moyennant sous l'effet de sa contrainte propre, contre la branche radiale (55, 56) du composant (53, 54).

24. Système d'entraînement selon les revendications 21 à 23, caractérisé en ce que les composants (53, 54) sont prévus en liaison, avec les éléments d'étanchéité (65, 66, également à l'extérieur des tourillons de chaîne (42) équipé de galets de roulement (73), lorsqu'on regarde dans la direction longitudinale de la chaîne de transport respective (4), entre les pattes intérieures (49, 50) et les pattes extérieures (47, 48) et sont repoussées contre les tourillons de chaîne associés (42, 78).

25. Système d'entraînement selon les revendications 21 à 24, caractérisé en ce que les composants (51, 54) sont réalisés en acier inoxydable.

26. Système d'entraînement selon les revendications 21 à 24, caractérisé en ce que les composants (53, 54) sont réalisés en matière plastique.

27. Système d'entraînement selon les revendications 21 à 26, caractérisé en ce qu'une graisse lubrifiante est insérée dans l'espace libre (61, 62) présent entre les composants (53, 54) et les éléments d'étanchéité (65, 66).

28. Système d'entraînement selon les revendications 21 à 27, caractérisé en ce que le manchon respectif (44) est entouré par un coussinet de protection (52).

29. Système d'entraînement selon les revendications 21 à 28, caractérisé en ce que le coussinet de protection (52) est formé d'une manière plastique.

30. Système d'entraînement selon les revendications 21 à 28, caractérisé en ce que le coussinet de protection (52) est réalisé en acier et prend appui par l' intermédiaire d'un palier lisse (81) sur le manchon associé (44).

31. Système d'entraînement selon la revendication 30, caractérisé en ce que le palier lisse (81) est fermé, au niveau de ses deux faces frontales, en direction de l' extérieur, respectivement par une garniture d'étanchéité (82, 83).

32. Système d'entraînement selon les revendicatîons 30 et 31, caractérisé en ce que la garniture d'étanchéité (82, 83) est formée par une rondelle, qui est insérée dans une gorge (84, 85) située dans la zone de la surface frontale respective du coussinet de protection (52) et prend appui, par sa surface frontale libre, contre la patte intérieure associée (49, 50).

33. Système d'entraînement selon les revendications 30 à 32, caractérisé en ce que le palier lisse (81) possède la même spécification de matériau que le palier lisse (45, 46) utilisé entre les tourillons de chaîne (42, 78) et les manchons (44).

34. Système d'entraînement selon les revendications 1 à 33, caractérisé en ce que dans le cas de l'utilisation des escaliers mécaniques ou des trottoirs roulants, les pattes (5, 6, 7) sont étamées galvaniquement dans la zone intérieure ou sont pourvues d'une protection contre la corrosion, en forme de laque.

35. Système d'entraînement selon les revendications 1 à 34, caractérisé en ce que les pattes (47, 48, 49, 50) sont traitées selon un traitement anti-rouille, notamment en étant galvanisées à chaud, dans le cas de l'utilisation des escaliers mécaniques ou des trottoirs roulants.

36. Système d'entraînement selon les revendications 1 à 35, caractérisé en ce que les tourillons de chaîne (9, 42) qui sont les plus longs axialement et sont équipés des galets de roulement (13, 73), sont montés de manière à pouvoir tourner dans des bouts d'axes (15, 43), qui sont pourvus chacun d'un perçage longitudinal (30, 68), des marches ou palettes (2) associées.

37. Système d'entraînement selon la revendication 36, caractérisé en ce que le palier (31, 69) est formé par un palier lisse lubrifié initialement.

38. Système d'entraînement selon les revendications 36 et 37, caractérisé en ce que le palier lisse (31, 69) possède la même spécification de matériau que les paliers lisses (18, 45, 46) disposés entre les tourillons (9, 42) et les manchons (11, 44).

39. Système d'entraînement selon les revendications 36 à 38, caractérisé en ce que le palier lisse (31) possède, à l'extérieur du perçage (30), une zone d'étanchéité radiale circonférentielle (32), qui s'étend radialement entre l'extrémité libre (33) du bout d'axe (15) et la patte extérieure associée (15).

40. Système d'entraînement selon les revendications 36 à 39, caractérisé en ce que le palier lisse (69) est fermé de façon étanche, en direction de l' extérieur, par un élément annulaire (71) qui est disposé sur l' extrémité libre du bout d'axe (63) et est formé d'un matériau autolubrifiant.
